# EUROPÄISCHE PATENTSCHRIFT

(11) **EP 1 565 962 B1**
(45) Veröffentlichungstag und Bekanntmachung des Hinweises auf die Patenterteilung: **28.06.2006**
(21) Anmeldenummer: 03789061.3
(22) Anmeldetag: 20.11.2003
(51) Int. Cl.: H01Q 21/30, H01Q 1/52, H04B 1/12, G01S 7/03

(54) **ANORDNUNG UND VERFAHREN ZUM BETRIEB EINER MEHRZAHL VON ENDGERÄTEN AN EINER GEMEINSAMEN ANTENNE**
SYSTEM FOR OPERATING A PLURALITY OF TERMINALS ON A COMMON ANTENNA, AND METHOD FOR OPERATING SUCH A SYSTEM
SYSTEME POUR FAIRE FONCTIONNER UNE PLURALITE DE TERMINAUX SUR UNE ANTENNE COMMUNE ET PROCEDE POUR FAIRE FONCTIONNER LEDIT SYSTEME

(30) Priorität: 28.11.2002 DE 10255795
(43) Veröffentlichungstag der Anmeldung: 24.08.2005
(73) Patentinhaber: DaimlerChrysler AG, 70567 Stuttgart (DE)
(72) Erfinder: ENGELS, Michael, 47804 Krefeld (DE); KUNISCH, Jürgen, 46539 Dinslaken (DE); LAUER, Andreas, 47506 Neukirchen-Vluyn (DE); REICHERT, Günter, 71563 Affalterbach (DE)
(86) Internationale Anmeldenummer: PCT/EP2003/012988
(87) Internationale Veröffentlichungsnummer: WO 2004/049506

(56) Entgegenhaltungen:
- WO-A-01/95507
- DE-A- 19 934 502
- US-A- 3 113 269
- US-A- 5 444 864

## Beschreibung

Die Erfindung betrifft eine Anordnung zum Betrieb einer Mehrzahl von Endgeräten an einer gemeinsamen abgesetzten Antenne sowie ein Verfahren zum Betrieb einer solchen Anordnung.

Beim Zusammenschalten mehrerer Endgeräte insbesondere Mobilfunkgeräte an eine einzelne Antenne tritt das Problem der Überkopplung der Sendeleistung eines Endgerätes in den Empfänger des oder der anderen angeschlossenen Endgeräte auf. Von besonderer Bedeutung ist das Überkoppeln bei Anordnungen, bei denen mehrere Endgeräte also Mobilfunkgeräte auf benachbarten Frequenzen zeitgleich senden bzw. empfangen. Ein Beispiel für derartige Sendeempfangssituationen für derartige Anordnungen ist durch den UMTS-TDD (Time-Division-Duplex)-Betrieb gegeben. Aber auch in Betriebsmodi, wie GSM oder UMTS-FDD (Frequency-Division-Duplex)-Betrieb, treten relevante Störungen durch die Überkopplung der Sendeleistung eines Endgerätes in den Empfang eines anderen Endgerätes auf. Um dies in seinem Ausmaß zu beschränken werden sehr aufwendige und kostenintensive Trennelemente eingesetzt.

Eine Anordnung zum Betrieb einer Mehrzahl von Endgeräten wie sie Gegenstand des Oberbegriffs des Anspruchs 1 ist, ist der deutschen Patentanmeldung DE 100 28 189 A1 bzw. der Korrespondierenden internationalen Patentanmeldung WO 01/95507 zu entnehmen. Die beschriebene Anordnung zum Betrieb mehrerer Endgeräte ist nicht in der Lage, ein Überkoppeln der Sendeleistung auf einen Empfänger eines anderen Gerätes auszuschließen oder stark abzudämpfen.

Der Erfindung liegt die Aufgabe zugrunde, eine Anordnung zum Betrieb einer Mehrzahl von Endgeräten an einer gemeinsamen abgesetzten Antenne und ein Verfahren zum Betreiben einer derartigen Anordnung anzugeben, das die störenden Überkopplungen der Sendeleistung eines Endgerätes in den Empfang eines anderen Endgerätes reduziert.

Diese Aufgabe wird erfindungsgemäß gelöst durch eine Anordnung zum Betrieb einer Mehrzahl von Endgeräten mit den Merkmalen des Anspruchs 1 und ein Verfahren zum Betrieb einer Anordnung mit einer Mehrzahl von Endgeräten an einer gemeinsamen abgesetzten Antenne mit den Merkmalen des Anspruchs 10.

Vorteilhafte Weiterbildungen sind Gegenstand der Unteransprüche.

Die erfindungsgemäße Anordnung zum Betrieb einer Mehrzahl von Endgeräten, an einer, gemeinsamen abgesetzten Antenne_.zeigt.ein.. Koppelnetzwerk, welches die Endgeräte mit der Antenne verbindet. Dabei ist der Antenne ein erstes Trennelement zugeordnet, das einen Sendepfad zur Übertragung eines Sendesignals von einem oder mehreren Endgeräten von dem Empfangspfad zur Übertragung eines Empfangssignals von der Antenne zu einem oder mehreren Endgeräten aufspaltet. Über dieses Trennelement findet regelmäßig ein Überkoppeln der Sendeleistung von dem Sendepfad in den Empfangspfad und damit ein Einkoppeln des Sendesignals in das zu verstärkende Empfangssignal statt. Dies führt zu einem gestörten Empfangssignal A_{RX}. Erfindungsgemäß ist der Sendepfad mit dem Empfangspfad über eine Kompensationsschaltung verbunden. Die Kompensationsschaltung KS koppelt in den Empfangspfad ein in Amplitude und Phasenlage angepasstes Sendesignal A_{TX} , welches als Kompensationssignal A'_{RX} bezeichnet wird, ein. Dies führt zu einer Überlagerung des gestörten Empfangssignals mit einem gegenphasigen Kompensationssignal, das den Einfluss der Störung durch das übergekoppelte Sendesignal in das Empfangssignal reduziert. In Kenntnis der Ausbildung des Koppelnetzwerkes lässt sich die notwendige Phasenverschiebung und Amplitudenanpassung durch die Kompensationsschaltung so einstellen, dass eine beachtliche Verbesserung und damit Reduzierung des Einflusses der Störung erreicht wird.

Durch diese Art der Ausbildung der Anordnung gelingt es bei der Verwendung von weniger hochwertigen Trennelementen bzw. weniger optimierten Koppelnetzwerken eine ausreichende Entkopplung des Sendepfades und des Empfangspfades einzelner Endgeräte der Anordnung sicherzustellen. Gerade bei der Verwendung von einfachen Trennelementen mit schlechter Trennleistung bzw. bei antennenbedingter schlechter Trennleistung gelingt es in Verbindung mit dem Betrieb der Endgeräte bei verschiedenen Frequenzen eine sehr kostengünstige Anordnung mit guter Trennung und damit geringer Störung im Empfangspfad zu erreichen.

Je mehr verschiedene Endgeräte an eine Antenne angeschlossen werden, um so aufwendiger ist es, ein Koppelnetzwerk mit einem oder entsprechend mehreren Kompensationsschaltungen, die eine Reduktion der Störungen auf den Empfangspfaden zu realisieren. Hierzu hat es sich bewährt, jedem Endgerät ein zweites Trennelement zuzuordnen, das so ausgeführt ist, dass es mit einem bidirektionalen Kommunikationspfad mit dem Endgerät verbunden ist und diesen in einen separat geführten Sende-und Empfangspfad aufspaltet, die wiederum zu dem einen gemeinsamen Sendepfad bzw. einen gemeinsamen Empfangspfad für das Koppelnetzwerk zusammengeführt sind. Dabei ist die Kompensationsschaltung zwischen dem einen gemeinsamen Sendepfad und dem einen gemeinsamen Empfangspfad realisiert. Dadurch ist eine sehr einfache und kostengünstige und schaltungstechnisch einfach zu realisierende Anordnung geschaffen, die mit einer einzigen Kompensationsschaltung auskommt.

Es hat sich besonders bewährt; in dem Sendepfad eine Sendestufe zur Verstärkung des Sendesignals und zum Ausgleich der Verluste durch die Trennelemente bzw. Koppelelemente zu schaffen sowie eine Verstärkerstufe im Empfangspfad vorzusehen, die die entsprechenden Verluste im Empfangspfad durch die Trennelemente bzw. die Kopplerelemente schafft. Der Abgriff des Sendesignals wird dabei nach der Verstärkung durch die Sendestufe gewählt, da nun ein Signal von ausreichender Stärke vorhanden ist, so dass ein Abgriff und damit eine Reduktion der über die Antenne abzugebenden Sendeleistung sich nur in geringem -Maße als schädlich erweist. Darüber hinaus ermöglicht es dieser Abgriffspunkt die Kompensationsschaltung ohne verstärkende Elemente auszubilden, was zu einer einfachen Realisierung der Kompensationsschaltung führt. Zudem hat es sich bewährt, die Überlagerung des Empfangssignals mit dem Kompensationssignal in einem Summenpunkt vor der Verstärkerstufe zu realisieren, da hierdurch ein verbessertes Empfangssignal gegeben ist bevor es einer Verstärkung zugeführt wird. Durch diese Anordnung gelingt es, den Einfluss durch eine Verstärkung in der Verstärkerstufe auf die Störungen nicht zu verhindern und dadurch eine stärkere Betonung der Störung weitgehend auszuschließen. Mithin erweist sich diese Anordnung als sehr einfache und im Hinblick auf die optimierte Beseitigung der Störeinflüsse vorteilhafte Ausbildung der Anordnung.

Neben der starren, unveränderlichen Phasen- bzw. Amplitudenveränderung des Sendesignals in der Kompensationsschaltung hat es sich besonders bewährt, diese Veränderungen dynamisch, veränderlich auszubilden, wobei das Kompensationssignal anhand der jeweiligen Sende- und Empfangssignale insbesondere durch einen Vergleich der beiden Signale gebildet wird. Dabei hat es sich neben der steuernden Vorgehensweise bewährt, die Anpassung des Kompensationssignals in Form einer Regelung durchzuführen. Hierzu wird insbesondere nach der Überlagerung bzw. Aufsummierung des Kompensationssignals mit dem gestörten Empfangssignal das Summensignal ausgewertet, insbesondere dahingehend ausgewertet, dass der Betrag des Signals L am Eingang der Verstärkerstufe LNA minimiert wird. Ist das Minimum erreicht, so ist die Regelung so gewählt, dass das Störsignal in dem Empfangssignal durch das Kompensationssignal minimiert ggf. komplett eliminiert ist. Durch diese dynamische Vorgehensweise gelingt es, Veränderungen im System, die insbesondere durch äußere Einflüsse wie veränderte Antennenumgebung, veränderte Temperatur oder Alterserscheinungen und ähnliches hervorgerufen werden, zu berücksichtigen und dadurch einen erfolgreichen Betrieb dauerhaft sicherzustellen.

Dabei hat es sich besonders bewährt, eine Regelung dahingehend vorzusehen, dass das überlagerte Empfangssignal insbesondere vor der Verstärkung durch die Verstärkerstufe abgegriffen wird, dass das abgegriffene überlagerte Empfangssignal mittels eines ersten Detektors betragsbildend also amplitudenbestimmend erfasst wird, um ein einfaches und verlässliches Maß zur Bewertung des überlagerten Empfangssignals im Hinblick auf das Maß der Störung zu gewinnen. Dies ist durch einen derartigen ersten betragsbildenden Detektor auf einfache Weise gegeben. Auf der Basis dieses durch den ersten Detektor gebildeten Amplitudensignals P wird in der Kompensationsschaltung die Phasenverschiebung bzw. die Anpassung in der Amplitude des zugeführten Sendesignals dahingehend angepasst, dass das Amplitudensignal minimiert wird. Ein minimiertes Amplitudensignal entspricht einer minimierten Störung des empfangenen Signals.

Nach einer besonders bevorzugten Ausbildung der erfindungsgemäßen Anordnung zeigt die Kompensationsschaltung drei Eingänge. Einen für das Sendesignal, einen für ein durch ein betragsbildenden zweiten Detektor aus dem Sendesignal bestimmtes Verstärkungssignal und einen für einen durch einen betragsbildenden ersten Detektor aus dem Empfangssignal bestimmtes Amplitudensignal sowie einen Ausgang für das Kompensationssignal A'_{RX}. Darüber hinaus zeigt die Kompensationsschaltung zwei getrennte Regelkreise, einen für den I-Anteil und einen für den Q-Anteil des Kompensationssignals. Jeder der beiden Regelkreise zeigt einen ersten Mischer, dem das Sendesignal mit seinem I- bzw. Q-Anteil und ein Regelsignal zugeführt wird. Dieses Regelsignal wird durch einen Integrator gebildet, dem das Verstärkungssignal und ein Ausgangssignal, welches durch Multiplikation bzw. Mischen des Amplitudensignals mit einem Signal eines lokalen Oszillators mit anschließender Tiefpassfilterung entstanden ist, zugeführt wurde, wobei dem Ausgangssignal des Integrators das Oszillatorsignal aufaddiert wurde. Dabei wird der Lokaloszillator vorzugsweise im Bereich von mehreren 10 MHz insbesondere 50 MHz betrieben. Durch diese Ausbildung der Kompensationsschaltung ist sichergestellt, dass ein Kompensationssignal gewonnen wird, welches der Störung durch das Sendesignal im Empfangspfad, also im Empfangssignal so entspricht, dass durch die Überlagerung ein verbessertes, gestörtes Empfangssignal gewonnen wird. Sollte mit einem starken Sendesignal gesendet werden, so wird der erste Mischer mit einem starken Sendesignal und einem durch den Integrator gewonnenen starken Regelsignal beaufschlagt, so dass ein starker I- respektive Q-Anteil für das Kompensationssignal entsteht. Dieses wird dann mit umgekehrten Vorzeichen dem gestörten Empfangssignal überlagert und damit die Störung reduziert oder eliminiert. Durch die Verwendung des Lokaloszillators gelingt es auf sehr vorteilhafte Weise die Regelrichtung zu bestimmen und die Regelsignale über den Integrator und den zweiten Mischer zielgerichtet entsprechend zu wählen. Dies führt zu einer sehr sicheren, effizienten und schnellen Regelung.

Eine alternative Ausbildung der Kompensationsschaltung zeigt einen vergleichbaren Aufbau, wobei im Gegensatz zur vorgenannten Ausbildung der Kompensationsschaltung das Regelsignal nicht durch Addition des Ausgangssignal des Integrators mit dem Oszillatorsignal gebildet wird. Hierdurch gelingt es auf den Summierer und die Zuleitung vom Lokaloszillator verzichten zu können. Dieses Ausgangssignal des Integrators wird als Regelsignal dem ersten Mischer des entsprechenden Regelkreises für den I-Anteil bzw. den Q-Anteil neben den entsprechenden Anteilen des Sendesignals zugeführt und zur Bildung des Kompensationssignals verwendet. Das durch eine Überlagerung des I- bzw. Q-Anteils gewonnene Kompensationssignal wird dem gestörten Empfangssignal mit umgekehrten Vorzeichen überlagert. Hierdurch wird eine Kompensation der Störung erreicht. Diese beschriebene Kompensationsschaltung zeigt einen einfacheren Aufbau als die alternative Ausbildungsform und ist somit kostengünstiger zu realisieren, wobei sie sich in der Regelqualität unterscheiden.

Als Trennelemente haben sich besonders Zirkulatoren, Richtkoppler, Schaltelemente oder Ringleitungstrennelemente bewährt, wobei sich insbesondere Zirkulatoren im Bereich der Antenne als erstes Trennelement bewährt haben, da sie sowohl das Sendesignal auf dem Hinweg zur Antenne bzw. das Empfangssignal auf dem Rückweg von der Antenne zum Endgerät mit recht guter Trennleistung trennen. Die Ringleitungstrennelemente zeigen eine wesentlich schlechtere Trennleistung wie sie auch Richtkopplern zu eigen ist. Für erfindungsgemäße Anordnungen mit nicht so hohen Anforderungen an die Trennleistung zwischen Sende- und Empfangspfad haben sich insbesondere Ringleitungstrennelemente insbesondere im Hinblick auf die Kosten besonders bewährt. Derartige Ringtrennelemente werden beispielsweise von der Firma Kathrein unter der Typenbezeichnung K 63 73 621 vertrieben.

Gerade durch die Verwendung der erfindungsgemäßen Anordnungen mit den genannten Kompensationsschaltungen ist es möglich eine ausreichende Trennung der Sende- und Empfangspfade gerade beim Betrieb der Anordnung im TDD-Modus, also im Betrieb, bei dem sowohl Sendesignale wie auch Empfangssignale zeitgleich auf derselben Frequenz übertragen werden, zu erreichen. Diese ausreichende Kanaltrennung ist von besonderer Bedeutung insbesondere für UMTS-Anwendungen, für die derartige erfindungsgemäße Anordnungen von besonderer Bedeutung sind.

Die Erfindung betrifft darüber hinaus ein Verfahren zum Betrieb einer Anordnung mit einer Mehrzahl von Endgeräten an einer gemeinsamen abgesetzten Antenne mit einem Koppelnetzwerk welches ein der Antenne zugeordnetes erstes Trennelement und ein dem jeweiligen Endgerät zugeordnetes zweites Trennelement umfasst. Dabei ist wenigstens eines der zweiten Trennelemente so ausgeführt ist, dass daran ein einzelner bidirektionaler von einem Endgerät zum Koppelnetzwerk führender Kommunikationspfad angeschlossen werden kann, dieses Trennelement diesen bidirektionalen Kommunikationspfad in im Koppelnetzwerk separat geführtes Sende- und Empfangspfade aufspaltet und dabei das erste Trennelement die Sendeempfangspfade mit der Antenne verbindet. Der Sendepfad und der Empfangspfad ist über eine Kompensationsschaltung dahingehend miteinander verbunden, dass zur Reduktion des Überkoppelns des Sendesignals dem gestörten Empfangssignal ein aus dem Sendesignal abgeleitetes Kompensationssignal überlagert wird. Dieses Kompensationssignal wird dabei so gewählt, dass es möglichst der durch das Sendesignal gebildeten Störung im gestörten Empfangssignal entspricht und mit umgekehrten Vorzeichen dem gestörten Empfangssignal überlagert- wird. Hierdurch wird die Störung durch das Kompensationssignal teilweise, weitgehend oder vollständig eliminiert, wodurch ein weniger oder gar nicht gestörtes Empfangssignal gebildet wird und den Endgeräte zugeführt wird.

Im folgenden wird die Erfindung anhand einer beispielhaften Ausführung der Erfindung, wie sie in den Fig. 1 bis 4 dargestellt ist, erläutert.
- Fig. 1: zeigt den beispielhaften Aufbau einer erfindungsgemäßen Anordnung,
- Fig. 2: zeigt einen beispielhaften Aufbau der Kompensationsschaltung aus Fig. 1
- Fig. 3: zeigt das Verhältnis zwischen Regelsignal alpha_I bzw. alpha_Q und Amplitudensignal P und
- Fig. 4: zeigt eine beispielhafte Anordnung aus mehreren den beiden Endgeräte zugeordneten zweiten Trennelementen aus Fig. 1.

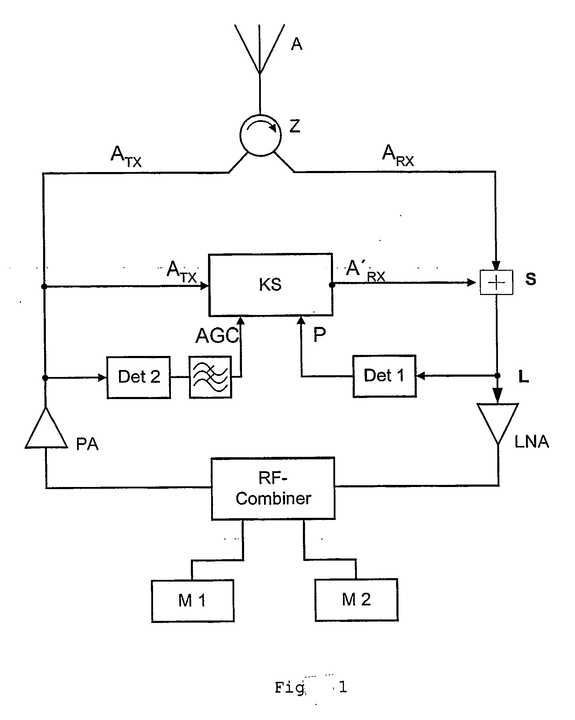

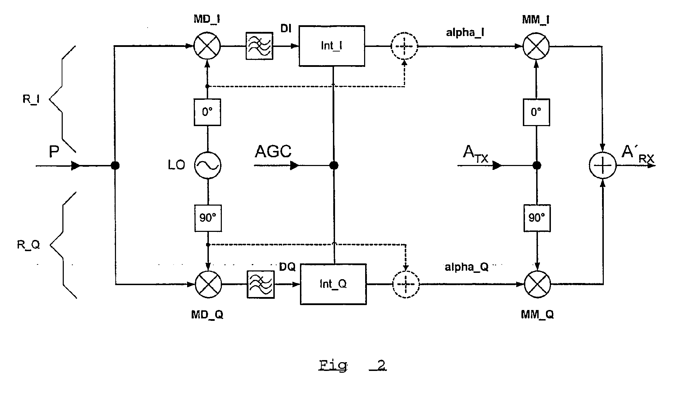

Figur 1 zeigt den Aufbau der erfindungsgemäßen Anordnung. Sie zeigt zwei Mobilfunk-Endgeräte M1, M2 , die über mehrere zweite Trennelemente, welche zu einem RF-Combiner zusammengefasst sind, und einem ersten Trennelement, welches einen Zirkulator Z darstellt, sende- und empfangsmäßig mit der Antenne A verbunden sind. Die Sendestufe PA im Sendepfad und die Verstärkerstufe LNA gleichen Systemverluste durch die Kopplung der Endgeräte mit der Antenne über das Koppelnetzwerk aus. Der Zirkulator reduziert das Überkoppeln des Sendesignals aus dem Sendepfad in den Empfangspfad. Da es nicht möglich ist, die Zirkulatordämpfung des Sendesignals in den Empfangszweig ausreichend zu dimensionieren, wird eine Kompensationsschaltung vorgesehen, die im weiteren Verlauf der Beschreibung insbesondere anhand der Figur 2 näher erläutert wird.
Die hier vorgestellte Anordnung mit der Kompensationsschaltung arbeitet nach dem Prinzip der adaptiven Interferenzauslöschung. Das heißt, es wird ein Kompensationssignal erzeugt, welches im Idealfall dem störenden Signal am Eingang der Verstärkerstufe LNA bis auf das Vorzeichen gleicht. Addiert man nun dieses Kompensationssignal und das gestörte Empfangssignal - also das Eingangssignal der Verstärkerstufe LNA - im Summenpunkt S, so verschwindet das durch das Sendesignal hervorgerufene Störsignal. Zur korrekten Einstellung und Nachführung dieses Auslöschungssignals dient die Kompensationsschaltung mit den ihr zugeordneten zwei betragsbildenden Detektoren Det1, Det2.
Das Störsignal wird allein durch den Sender als Sendesignal A_{TX} erzeugt, das dem Störsignal am LNA bis auf einen konstanten bzw. langsam veränderlichen Amplitudenfaktor und eine konstante bzw. langsam veränderliche Phasenverschiebung gleicht. Dieses Sendesignal A_{TX} wird der Kompensationsschaltung KS zur Verfügung gestellt, um daraus durch geeignete Einstellung von Amplitude und Phase das Kompensationssignal A'_{RX} zu erzeugen, das zum gestörten Empfangssignal im gestörten Empfangspfad im Summenpunkt S addiert wird.
Die Aufgabe der Kompensationsschaltung besteht darin, die Amplitude und Phase (oder äquivalent den I- und Q-Anteil) des Kompensationssignals so einzustellen, dass der vom Sendesignal herrührende Störanteil im Empfangssignal am LNA Eingang, also am Summenpunkt S, zu Null oder zumindest reduziert wird. Dies erfolgt durch Minimierung des durch den Detektor Det1 detektierten Signals P.

Figur 2 ermöglicht einen genaueren Einblick in die Funktionsweise der Kompensationsschaltung KS.

Die beiden Mischer MM_I und MM_Q auf der rechten Seite dienen als Stellglieder um den I- und Q-Anteil des Kompensationssignals einzustellen. Eingangssignale für die-Stellglieder sinddie Signale alpha_I und alpha_Q, die vom eigentlichen Regler, dem Integrator Int_I, Int_Q, erzeugt werden. Die Anordnung besteht auf Grund der Orthogonalität der Signale im I- und Q-Zweig aus zwei unabhängigen Regelkreisen R_I, R_Q; alpha_I wirkt sich also nur auf DI aus und alpha_Q nur auf DQ. Zur Beschreibung des Regelverhaltens reicht es daher aus, nur einen Anteil des komplexen Signalpfads (hier den 1-Anteil) zu betrachten. Der andere Anteil wird zur Vereinfachung der Darstellung als korrekt eingestellt angenommen. Mit anderen Worten wird statt des komplexen I/Q-Signals vereinfachend nur der (skalare) I-Kanal betrachtet.

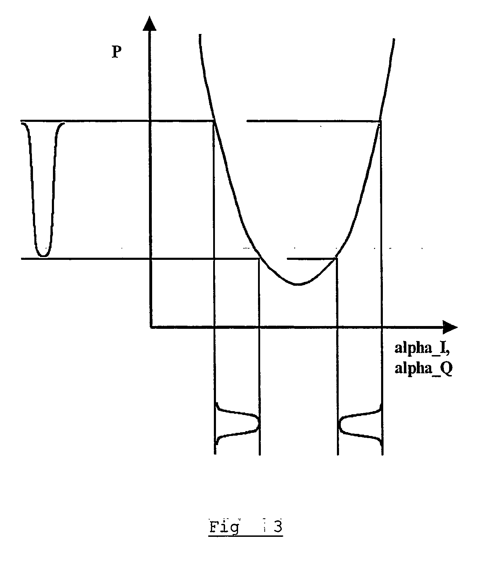

Eine Schwierigkeit bei der Konzeption der Regelung besteht darin, dass der Regelsinn nicht bekannt ist, wie folgende Überlegung zeigt: Trägt man nämlich die Amplitude P des Summensignals L (Figur 1), wie sie vom Detektor an die Kompensationsschaltung KS geliefert wird, gegen das Signal alpha_I (bzw. alpha_Q) am Mischereingang von MM_I (bzw. MM_Q), für die offene Regelstrecke auf, ergibt sich bei einem bestimmten Wert für alpha_I (bzw. das Wertepaar alpha_I, alpha_Q) ein Minimum. Für den skalaren Fall (s.o.) sind diese Verhältnisse in Figur 3 wiedergegeben.

Man erkennt, das verschiedene alpha_I zur gleichen Signalamplitude P führen können und somit statisch nicht entschieden werden kann, ob die Regelung die Größe alpha_I erhöhen oder erniedrigen müsste um das Regelergebnis P in das Minimum zu bringen. Das bedeutet mit anderen Worten, dass sich der Regelsinn der Funktion P(alpha_I) bei Überschreitung dieses Minimums ändert.
Es wird daher wie in Figur 2 ersichtlich, eine Möglichkeit geschaffen, diesen Regelsinn festzustellen. Dazu wird, ein kleines 50 MHz Testsignal mittels des Lokaloszillators LO zu dem Signal alpha_I (bzw. alpha_Q) addiert und im nachfolgenden Mischer MM_I (bzw. MM_Q) auf das Auslöschsignal moduliert. Dieses Signal wird zu dem parasitären Störsignal addiert und das Amplitudensignal P tritt nach Betragsbildung durch den Detektor wieder in die Kompensationsschaltung KS.

Es gilt nun:
Führt die positive Halbwelle des 50 MHz Signals zu einer Erhöhung des Signals P und die negative Halbwelle zu einer Verringerung, so ist der Regelsinn positiv.
Führt die positive Halbwelle des 50 MHz Signals zu einer Verringerung des Signals P und die negative Halbwelle zu einer Erhöhung, so ist der Regelsinn negativ.
Führen beide Halbwellen zu einer Erhöhung des Signals, so ist der Regler im Minimum.

Dieser Vergleich wird nun wie folgt im ersten Mischer MD_I (bzw. MD_Q) durchgeführt. Da das Amplitudensignal P durch Betragsbildung (Gleichrichtung) aus dem mit 50 MHz amplitudenmodulierten Fehlersignal am LNA entsteht, kann man sich dessen Zeitverlauf im wesentlichen als 50 MHz-Pulse vorstellen, deren Phasenlage zum Lokaloszillator LO einerseits und deren Amplitude andererseits ein Kriterium dafür sind, wie gut die Kompensationsschaltung KS eingestellt ist. Die noch überlagerte HF im Rhythmus der Trägerfrequenz bzw. des Amplitudensignals P hat praktisch keine Auswirkung auf die nachfolgende Signalverarbeitung und kann vernachlässigt werden.

Zur Bestimmung dieser Verhältnisse werden das Signal P und das vom Lokaloszillator (LO) stammende 50 MHz-Signal im ersten Mischer MD_I (bzw. MD_Q) miteinander multipliziert und somit ein Phasenvergleich und eine Amplitudengewichtung gemäß der Amplitude von P durchgeführt. Vorzeichen und Amplitude des Ausgangssignals DI geben Regelsinn und Regelabweichung an. Dieses Signal kann daher als Eingangssignal für den eigentlichen Regler dem Integrator Int_I dienen, der seinerseits wieder die Signale alpha_I bzw. entsprechend alpha_Q liefert.

Zur Erhöhung der Regelgeschwindigkeit wird dem Regler eine Amplitudenänderung des Sendesignals, wie es durch das Ramping im Sender entsteht, über den Eingang AGC mitgeteilt und die Verstärkung des Integrators damit eingestellt.

Zur Vereinfachung des Schaltungsaufbaus ist es möglich, das 50 MHz Testsignal nicht direkt auf alpha_I (bzw. alpha_Q) zu addieren, sondern die ohnehin vorhandene Überkopplung über den Mischer und den Integrator, zu verwenden. Die in Figur 2 gestrichelt eingezeichneten Elemente (Addierer und Signalweg) fallen bei der Vereinfachung weg. Hierbei muss jedoch darauf geachtet werden, dass sich die Phase das Testsignals am ersten Mischer MMI_I (bzw. MM_Q) richtig eingestellt wird, weshalb das Tiefpassfilter hinter dem zweiten Mischer MD_I (bzw. MD_Q) erster Ordnung gewählt wird.

Der erste Mischer MM_I (bzw. MM_Q) sorgt nun dafür, dass das in ihn eingespeiste Sendesignal für die Störung mit der Summe aus Integrationsergebnis und 50 MHz-Testsignal amplitudenmoduliert wird. Das entstehende Kompensationssignal wird zur Auslöschung des Störsignals am LNA verwendet.

Betrachtet man die vollständige Anordnung aus MM_I, MM_Q und dem Summierer zur Bildung des Kompensationssignals A'_{RX}, so kann man diese auch als I/Q-Modulator verstehen. Erfindungsgemäß wird die mathematische Erkenntnis (Additionstheorem) ausgenutzt, dass die Addition zweier sinusförmiger Eingangsignale gleicher Frequenz aber unterschiedlicher Phasenlagen und Amplituden zu einem wiederum sinusförmigen Signal führt, dessen Phase und Amplitude sich durch die Phasen (hier fix 0° und 90°) und Amplituden (hier alpha_I und alpha_Q) der Eingangssignale einstellen lässt.

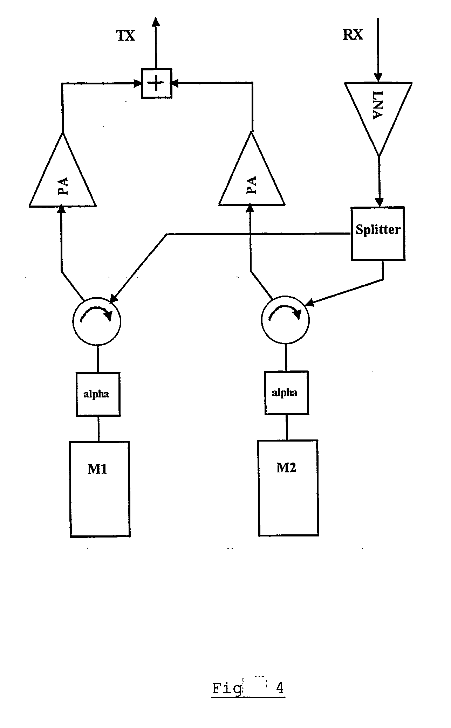

Der RF-Combiner in Figur 1 wird anhand der Figur 4 näher erläutert. Er hat die Aufgabe, die beiden Endgeräte - hier Mobilfunkgeräte M1, M2 - mit dem Sende- und Empfangspfad zu verbinden und dabei die Sendeleistung eines Geräts vom anderen Gerät weitgehend fernzuhalten, damit der Empfang auf letzterem nicht gestört wird.

Die Zirkulatoren sorgen für die Entkopplung der beiden Endgeräte M1 und M2. Damit gesendete HF-Leistung nicht über den Summenpunkt (+) in das jeweils andere Endgerät (M1 bzw. M2) gelangt, sind 2 Sendeendstufen PA vorgesehen, die dies durch ihre Rückwärtsisolation verhindern. Die Dämpfungsglieder alpha sorgen allein oder in Verbindung mit der Sendestufe PA im gemeinsamen Sendepfad entsprechend Figur 1 für die richtige Verstärkungsbilanz (PA-Verstärkung), bieten weitere Isolation und ermöglichen einen reflexionsarmen Abschluss der Zirkulatoren.

Die beschriebene erfindungsgemäße Anordnung zeigt eine sehr gute Trennung des Sendepfads vom Empfangspfad und damit kein oder nur ein sehr geringes Überkoppeln der Sendeleistung in den Empfangspfad. Damit lassen sich derartige Störungen im Empfangssignal weitgehend eliminieren. Die beschriebene Anordnung ist insbesondere geeignet im Rahmen eine UMTS-TDD Betriebes verwendet zu werden, was gerade durch ihre besondere Trennleistung ermöglicht wird.

## Patentansprüche

1. Anordnung zum Betrieb einer Mehrzahl von Endgeräten an einer gemeinsamen abgesetzten Antenne mit einem Koppelnetzwerk, welches ein der Antenne zugeordnetes erstes Trennelement aufweist, das einen getrennten Sendepfad zur Übertragung eines Sendesignals (A_{TX}) und einen davon getrennten Empfangspfad zur Übertragung eines Empfangssignals (A_{RX}) aufspaltet,
**dadurch gekennzeichnet,**
**dass** der Sendepfad und der Empfangspfad über eine Kompensationsschaltung (KS) miteinander verbunden sind, welche dem Empfangssignal (A_{RX}) ein aus dem Sendesignal (A_{TX}) abgeleitetes Kompensationssignal (A'_{RX}) überlagert, wobei die Kompensationsschaltung (KS) so ausgebildet ist, dass durch Vergleich des Sendesignals (A_{TX}) und des Empfangssignals (A_{RX}) oder eines überlagerten Empfangssignals vor einer Verstärkerstufe ein phasenkorrektes und amplitudenkorrektes Kompensationssignal (A'_{RX}) gebildet wird,
und die Kompensationsschaltung (KS) eine Regelstufe aufweist, die durch Phasenverschiebung und Verstärkung bzw. Abschwächung des zugeführten Sendesignals (A_{TX}) das Amplitudensignal (P) minimiert und **dadurch** den Einfluss des Sendesignals (A_{TX}) auf das Empfangssignal (A_{RX}) reduziert und wobei die Kompensationsschaltung (KS) einen Eingang für das Sendesignal (A_{TX}),
einen Eingang für ein durch einen betragsbildenden ersten Detektor (DET1) aus dem Empfangssignal bestimmtes Amplitudensignal (P),
einen Eingang für ein durch einen betragsbildenden zweiten Detektor (DET2) aus dem Sendesignal bestimmtes Verstärkungssignal (AGC),
und einen Ausgang für das Kompensationssignal (A'_{RX}) sowie getrennte Regelkreise (R_I, R_Q) zur Bildung der I-und Q-Anteile des Kompensationssignals (A'_{RX}) aus dem Sende- (A_{TX}) und dem überlagerten Empfangssignal aufweist, wobei jeder Regelkreis (R_I, R_Q) einen ersten Mischer (MM_I, MM_Q) aufweist, dem das Sendesignal (A_{TX}) und ein Regelsignal (alpha_I, alpha_Q) zugeführt wird,
und wobei jeder Regelkreis (R_I, R_Q) einen zweiten Mischer (MDI, MD_Q) aufweist, dem das Amplitudensignal (P) des ersten Detektors (DET1)und ein Signal eines Lokaloszillators (LO) zugeführt werden und der ein Ausgangssignal (D_I, D_Q) liefert,
welches neben dem Verstärkungssignal (AGC) einem Integrator (Int_I, Int_Q) zur Bildung des Regelsignals (alpha_I, alpha_Q) zugeführt wird.

2. Anordnung zum Betrieb einer Mehrzahl von Endgeräten nach Anspruch 1,
**dadurch gekennzeichnet ,**
**dass** das Koppelnetzwerk ein dem jeweiligen Endgerät zugeordnetes zweites Trennelement umfasst, wobei wenigstens eines der Trennelemente so ausgeführt ist,
**dass** daran ein einzelner, bidirektionaler von einem Endgerät zu dem Koppelnetzwerk führender Kommunikationspfad angeschlossen werden kann, wobei dieses Trennelement diesen bidirektionalen Kommunikationspfad in im Koppelnetzwerk separat geführte Sende- und Empfangspfade aufspaltet und wobei das erste Trennelement die gemeinsamen Sende- und Empfangspfade mit der Antenne verbindet.

3. Anordnung zum Betrieb einer Mehrzahl von Endgeräten nach Anspruch 1 oder 2,
**dadurch gekennzeichnet ,**
**dass** der Sendepfad eine Sendestufe (PA) und der Empfangspfad eine Verstärkerstufe (LNA) aufweist und dass ein Abgriff des Sendesignals (A_{TX}) nach der Sendestufe (PA) zur Weiterleitung an die Kompensationsschaltung (KS) und eine Überlagerung des in der Kompensationsschaltung generierten Kompensationssignal (A'_{RX}) vor der Verstärkerstufe (LNA) in einem Summenpunkt (S) vorgesehen ist.

4. Anordnung zum Betrieb einer Mehrzahl von Endgeräten nach einem der vorangehenden Ansprüche,
**dadurch gekennzeichnet ,**
**dass** das Ausgangssignal (D_I, D_Q) neben dem Verstärkungssignal (AGC) dem Integrator (Int_I, Int_Q) mit anschließender Überlagerung mit dem Signal des Lokaloszillators (LO) in einem Summierer zur Bildung des Regelsignals (alpha_I, alpha_Q) zugeführt wird.

5. Anordnung zum Betrieb einer Mehrzahl von Endgeräten nach einem der vorstehenden Ansprüche,
**dadurch gekennzeichnet ,**
**dass** die Trennelemente Zirkulatoren, Richtkoppler, Schaltelemente oder Ringleitungstrennelemente darstellen.

6. Anordnung zum Betrieb einer Mehrzahl von Endgeräten nach einem der vorstehenden Ansprüche,
**dadurch gekennzeichnet ,**
**dass** es sich um eine Anordnung für den Betrieb im TDD-Modus handelt.

7. Verfahren zum Betrieb einer Anordnung mit einer Mehrzahl von Endgeräten an einer gemeinsamen abgesetzten Antenne, mit einem Koppelnetzwerk, welches ein der Antenne zugeordnetes erstes Trennelement und ein dem jeweiligen Endgerät zugeordnetes zweites Trennelement umfasst, wobei wenigstens eines der Trennelemente so ausgeführt ist, dass daran ein einzelner, bidirektionaler von einem Endgerät zu dem Koppelnetzwerk führender Kommunikationspfad angeschlossen werden kann, wobei dieses Trennelement diesen bidirektionalen Kommunikationspfad in im Koppelnetzwerk separat geführte Sende- und Empfangspfade aufspaltet und wobei das erste Trennelement die Sende- und Empfangspfade mit der Antenne verbindet,
**dadurch gekennzeichnet ,**
**dass** der Sendepfad und der Empfangspfad über eine Kompensationsschaltung (KS) miteinander verbunden ist, welche zur Reduktion des Überkoppelns des Sendesignals (A_{TX}) auf das Empfangssignal dem gestörten Empfangssignal (A_{RX}) ein aus dem Sendesignal (A_{TX}) abgeleitetes Kompensationssignal (A'_{RX}) überlagert und wobei in der Kompensationsschaltung durch einen Vergleich des Sendesignals (A_{TX}) und des Empfangssignals (A_{RX}) oder eines überlagerten Empfangssignals vor einer Verstärkerstufe ein phasenkorrektes und amplitudenkorrektes Kompensationssignal (A'_{RX}) gebildet wird, und die Kompensationsschaltung (KS) eine Regelstufe aufweist, die durch Phasenverschiebung und Verstärkung bzw. Abschwächung des zugeführten Sendesignals (A_{TX}) das Amplitudensignal (P) minimiert und **dadurch** den Einfluss des Sendesignals (A_{TX}) auf das Empfangssignal (A_{RX}) reduziert und wobei die Kompensationsschaltung (KS) einen Eingang für das Sendesignal (A_{TX}),
einen Eingang für ein durch einen betragsbildenden ersten Detektor (DET1) aus dem Empfangssignal bestimmtes Amplitudensignal (P),
einen Eingang für ein durch einen betragsbildenden zweiten Detektor (DET2) aus dem Sendesignal bestimmtes Verstärkungssignal (AGC),
und einen Ausgang für das Kompensationssignal (A'_{RX}) sowie getrennte Regelkreise (R_I, R_Q) zur Bildung der I-und Q-Anteile des Kompensationssignals (A'_{RX}) aus dem Sende- (A_{TX}) und dem überlagerten Empfangssignal aufweist, wobei jeder Regelkreis (R_I, R_Q) einen ersten Mischer (MM_I, MM_Q) aufweist, dem das Sendesignal(A_{TX}) und ein Regelsignal (alpha_I, alpha_Q) zugeführt wird,
und wobei jeder Regelkreis (R_I, R_Q) einen zweiten Mischer (MDI, MD_Q) aufweist, dem das Amplitudensignal (P) des ersten Detektors (DET1)und ein Signal eines Lokaloszillators (LO) zugeführt werden und der ein Ausgangssignal (D_I, D_Q) liefert,
welches neben dem Verstärkungssignal (AGC) einem Integrator (Int_I, Int_Q) zur Bildung des Regelsignals (alpha_I, alpha_Q) zugeführt wird.

## Claims

1. System for operating a plurality of terminals on a common remote antenna with a switching network which has a first separating element assigned to the antenna which splits up a separate transmission path for transmission of a transmit signal (A_{TX}) and a reception path separated therefrom for the transmission of a reception signal (A_{RX}),
**characterized in that**
the transmission path and the reception path are interconnected via a compensation circuit (KS), which overlays the reception signal (A_{RX}) with a compensation signal (A'_{RX}) derived from the transmission signal (A_{TX}), whereby the compensation circuit (KS) is designed in such a way that, by comparing the transmission signal (A_{TX}) with the reception signal (A_{RX}) or an overlaid reception signal upstream of an amplifier stage, a compensation signal (A'_{RX}) with the correct phase and amplitude is formed,
and the compensation circuit (KS) has a control stage which, through phase shift and amplification or attenuation of the supplied transmission signal (A_{TX}), minimizes the amplitude signal (P) and thereby reduces the influence of the transmission signal (A_{TX}) on the reception signal (A_{RX}), and whereby the compensation circuit (KS) has an input for the transmission signal (A_{TX}),
an input for an amplitude signal (P) defined by a value-forming first detector (DET1) from the reception signal,
an input for an amplification signal (AGC) defined by a value-forming second detector (DET2) from the transmission signal,
and an output for the compensation signal (A'_{RX}) and separate control circuits (R_I, R_Q) to form the I and Q components of the compensation signal (A'_{RX}) from the transmission signal (A_{TX}) and the overlaid reception signal,
whereby each control circuit (R_I, R_Q) has a first mixer (MM_I, MM_Q), to which the transmission signal (A_{TX}) and a control signal (alpha_I, alpha_Q) are fed,
and whereby each control circuit (R_I, R_Q) has a second mixer (MDI, MD_Q), to which the amplitude signal (P) of the first detector (DET1) and a signal of a local oscillator (LO) are fed, and which delivers an output signal (D_I, D_Q),
which, along with the amplification signal (AGC), is fed to an integrator (Int_I, Int_Q) to form the control signal (alpha_I, alpha_Q).

2. System for operating a plurality of terminals according to Claim 1,
**characterized in that**
the switching network comprises a second separating element assigned to the relevant terminal, whereby at least one of the separating elements is designed in such a way that
an individual, bidirectional communications path routed from a terminal to the switching network can be connected thereto, whereby this separating element splits up this bidirectional communications path into transmission and reception paths routed separately in the switching network, and whereby the first separating element connects the common transmission and reception paths to the antenna.

3. System for operating a plurality of terminals according to Claim 1 or 2,
**characterized in that**
the transmission path has a transmission stage (PA) and the reception path has an amplifier stage (LNA), and a tap of the transmission signal (A_{TX}) downstream of the transmission stage (PA) for forwarding to the compensation circuit (KS) and an overlay of the compensation signal (A'_{RX}) generated in the compensation circuit upstream of the amplifier stage (LNA) in a summation point (S) are provided.

4. System for operating a plurality of terminals according to one of the preceding claims,
**characterized in that**
the output signal (D_I, D_Q), along with the amplification signal (AGC) is fed to the integrator (Int_I, Int_Q) with subsequent overlaying with the signal of the local oscillator (LO) in a summator to form the control signal (alpha_I, alpha_Q).

5. System for operating a plurality of terminals according to one of the preceding claims,
**characterized in that**
the separating elements represent circulators, directional couplers, switching elements or loop-disconnecting elements.

6. System for operating a plurality of terminals according to one of the preceding claims,
**characterized in that**
a system for operating in TDD mode is involved.

7. Method for operating a system with a plurality of terminals on a common remote antenna, with a switching network which comprises a first separating element assigned to the antenna and a second separating element assigned to the relevant terminal, whereby at least one of the separating elements is designed in such a way that an individual, bidirectional communications path routed from a terminal to the switching network can be connected thereto, whereby this separating element splits up this bidirectional communications path into transmission and reception paths routed separately in the switching network, and whereby the first separating element connects the transmission and reception paths to the antenna,
**characterized in that**
the transmission path and the reception path are interconnected via a compensation circuit (KS), which, in order to reduce the overcoupling of the transmission signal (A_{TX}) onto the reception signal, overlays the interference-affected reception signal (A_{RX}) with a compensation signal (A'_{RX}) derived from the transmission signal (A_{TX}), and whereby, in the compensation circuit, by comparing the transmission signal (A_{TX}) with the reception signal (A_{RX}) or an overlaid reception signal upstream of an amplifier stage, a compensation signal (A'_{RX}) with the correct phase and amplitude is formed, and the compensation circuit (KS) has a control circuit which minimizes the amplitude signal (P) through phase shift and amplification or attenuation of the supplied transmission signal (A_{TX}), and thereby reduces the influence of the transmission signal (A_{TX}) on the reception signal (A_{RX}),
and whereby the compensation circuit (KS) has an input for the transmission signal (A_{TX}),
an input for an amplitude signal (P) defined by a value-forming first detector (DET1) from the reception signal,
an input for an amplification signal (AGC) defined by a value-forming second detector (DET2) from the transmission signal,
and an output for the compensation signal (A'_{RX}) and separate control circuits (R_I, R_Q) to form the I and Q components of the compensation signal (A'_{RX}) from the transmission signal (A_{TX}) and the overlaid reception signal,
whereby each control circuit (R_I, R_Q) has a first mixer (MM_I, MM_Q), to which the transmission signal (A_{TX}) and a control signal (alpha_I, alpha_Q) are fed,
and whereby each control circuit (R_I, R_Q) has a second mixer (MDI, MD_Q), to which the amplitude signal (P) of the first detector (DET1) and a signal of a local oscillator (LO) are fed, and which delivers an output signal (D_I, D_Q),
which, along with the amplification signal (AGC), is fed to an integrator (Int_I, Int_Q) to form the control signal (alpha_I, alpha_Q).

## Revendications

1. Arrangement pour faire fonctionner une pluralité de terminaux sur une antenne déportée commune comprenant un réseau de couplage, qui présente un premier élément de séparation associé à l'antenne, lequel sépare un chemin d'émission séparé destiné à transmettre un signal d'émission (A_{TX}) et un chemin de réception séparé de celui-ci destiné à transmettre un signal de réception (A_{RX}), **caractérisé en ce que** le chemin d'émission et le chemin de réception sont reliés ensemble par un circuit de compensation (KS) qui superpose au signal de réception (A_{RX}) un signal de compensation (A'_{RX}) dérivé du signal d'émission (A_{TX}), le circuit de compensation (KS) étant configuré de telle sorte qu'un signal de compensation (A'_{RX}) ayant la phase et l'amplitude correctes est formé avant un étage amplificateur en comparant le signal d'émission (A_{TX}) et le signal de réception (A_{RX}) ou un signal de réception superposé, et le circuit de compensation (KS) présente un étage de régulation qui minimise le signal d'amplitude (P) par déphasage et amplification ou atténuation du signal d'émission (A_{TX}) acheminé et réduit ainsi l'influence du signal d'émission (A_{TX}) sur le signal de réception (A_{RX}), le circuit de compensation (KS) présentant une entrée pour le signal d'émission (A_{TX}), une entrée pour un signal d'amplitude (P) déterminé à partir du signal de réception par un premier détecteur produisant une valeur (DET1), une entrée pour un signal d'amplification (AGC) déterminé à partir du signal d'émission par un deuxième détecteur produisant une valeur (DET2) et une sortie pour le signal de compensation (A'_{RX}) ainsi que des circuits de régulation séparés (R_I, R_Q) pour former les parties I et Q du signal de compensation (A'_{RX}) à partir du signal d'émission (A_{TX}) et du signal de réception superposé, chaque circuit de régulation (R_I, R_Q) présentant un premier mélangeur (MM_I, MM_Q) auquel sont acheminés le signal d'émission (A_{TX}) et un signal de régulation (alpha_I, alpha_Q), et chaque circuit de régulation (R_I, R_Q) présentant un deuxième mélangeur (MDI, MD_Q) auquel sont acheminés le signal d'amplitude (P) du premier détecteur (DET1) et un signal d'un oscillateur local (LO) et qui délivre un signal de sortie (D_I, D_Q) qui est acheminé en plus du signal d'amplification (AGC) à un intégrateur (Int_I, Int_Q) pour calculer le signal de régulation (alpha_I, alpha_Q).

2. Arrangement pour faire fonctionner une pluralité de terminaux selon la revendication 1, **caractérisé en ce que** le réseau de couplage comprend un deuxième élément de séparation associé au terminal correspondant, au moins l'un des éléments de séparation étant configuré de telle sorte qu'il est possible d'y raccorder un chemin de communication individuel bidirectionnel menant d'un terminal au réseau de couplage, cet élément de séparation séparant ce chemin de communication bidirectionnel en des chemins d'émission et de réception acheminés séparément dans le réseau de couplage et le premier élément de séparation reliant les chemins d'émission et de réception communs avec l'antenne.

3. Arrangement pour faire fonctionner une pluralité de terminaux selon la revendication 1 ou 2, **caractérisé en ce que** le chemin d'émission présente un étage d'émission (PA) et le chemin de réception un étage amplificateur (LNA) et qu'un prélèvement du signal d'émission (A_{TX}) est prévu après l'étage d'émission (PA) en vue d'une retransmission au circuit de compensation (KS) ainsi qu'une superposition du signal de compensation (A'_{RX}) généré dans le circuit de compensation avant l'étage amplificateur (LNA) dans un point d'addition (S).

4. Arrangement pour faire fonctionner une pluralité de terminaux selon l'une des revendications précédentes, **caractérisé en ce que** le signal de sortie (D_I, D_Q), en plus du signal d'amplification (AGC), est acheminé à l'intégrateur (Int_I, Int_Q) pour ensuite être superposé avec le signal de l'oscillateur local (LO) dans un additionneur pour former le signal de régulation (alpha_I, alpha_Q).

5. Arrangement pour faire fonctionner une pluralité de terminaux selon l'une des revendications précédentes, **caractérisé en ce que** les éléments de séparation représentent des circulateurs, des coupleurs directionnels, des éléments de commutation ou des éléments séparateurs de ligne en anneau.

6. Arrangement pour faire fonctionner une pluralité de terminaux selon l'une des revendications précédentes, **caractérisé en ce qu'**il s'agit d'un arrangement destiné à fonctionner en mode TDD.

7. Procédé pour faire fonctionner un arrangement comprenant une pluralité de terminaux sur une antenne déportée commune comprenant un réseau de couplage, qui présente un premier élément de séparation associé à l'antenne et un deuxième élément de séparation associé au terminal correspondant, au moins l'un des éléments de séparation étant réalisé de telle sorte qu'il est possible d'y raccorder un chemin de communication individuel bidirectionnel menant d'un terminal au réseau de couplage, cet élément de séparation séparant ce chemin de communication bidirectionnel en des chemins d'émission et de réception acheminés séparément dans le réseau de couplage et le premier élément de séparation reliant les chemins d'émission et de réception avec l'antenne, **caractérisé en ce que** le chemin d'émission et le chemin de réception sont reliés ensemble par un circuit de compensation (KS) qui, pour réduire le surcouplage du signal d'émission (A_{TX}) sur le signal de réception (A_{RX}), superpose au signal de réception (A_{RX}) perturbé un signal de compensation (A'_{RX}) dérivé du signal d'émission (A_{TX}) et un signal de compensation (A'_{RX}) ayant la phase et l'amplitude correctes étant formé dans le circuit de compensation avant un étage amplificateur en comparant le signal d'émission (A_{TX}) et le signal de réception (A_{RX}) ou un signal de réception superposé, et le circuit de compensation (KS) présente un étage de régulation qui minimise le signal d'amplitude (P) par déphasage et amplification ou atténuation du signal d'émission (A_{TX}) acheminé et réduit ainsi l'influence du signal d'émission (A_{TX}) sur le signal de réception (A_{RX}), et le circuit de compensation (KS) présentant une entrée pour le signal d'émission (A_{TX}), une entrée pour un signal d'amplitude (P) déterminé à partir du signal de réception par un premier détecteur produisant une valeur (DET1), une entrée pour un signal d'amplification (AGC) déterminé à partir du signal d'émission par un deuxième détecteur produisant une valeur (DET2) et une sortie pour le signal de compensation (A'_{RX}) ainsi que des circuits de régulation séparés (R_I, R_Q) pour former les parties I et Q du signal de compensation (A'_{RX}) à partir du signal d'émission (A_{TX}) et du signal de réception superposé, chaque circuit de régulation (R_I, R_Q) présentant un premier mélangeur (MM_I, MM_Q) auquel sont acheminés le signal d'émission (A_{TX}) et un signal de régulation (alpha_I, alpha_Q), et chaque circuit de régulation (R_I, R_Q) présentant un deuxième mélangeur (MDI, MD_Q) auquel sont acheminés le signal d'amplitude (P) du premier détecteur (DET1) et un signal d'un oscillateur local (LO) et qui délivre un signal de sortie (D_I, D_Q) qui est acheminé en plus du signal d'amplification (AGC) à un intégrateur (Int_I, Int_Q) pour calculer le signal de régulation (alpha_I, alpha_Q).
